# EUROPEAN PATENT APPLICATION

(11) **EP 2 378 440 A1**
(43) Date of publication of application: **19.10.2011**
(21) Application number: 11158080.9
(22) Date of filing: 14.03.2011
(51) Int. Cl.: G06F 17/30, G10L 15/26, H04M 1/725

(54) **System and method for location tracking using audio input**

(30) Priority: 15.04.2010 US 760634
(71) Applicant: Sony Ericsson Mobile Communications AB, 221 88 Lund (SE)
(72) Inventor: Agevik, Markus, 212 30, Malmö (SE)
(74) Representative: Aurell, Henrik

(57) **Abstract**

An electronic device (10) and method of location tracking adapted to enhance a user's ability in recalling or returning to a former location. The electronic device may record audio, such as the user's speech and/or speech from others. The location at which the speech is recorded is determined and stored. The speech may be converted to text, which is associated with the determined location. The converted text may be indexed for searching. A user may perform a text-based search for words that the user may recall speaking and/or hearing at the location. Returned search results may remind the user of the location and provide directions for returning to the location.

## Description

### TECHNICAL FIELD OF THE INVENTION

The technology of the present disclosure relates generally to portable electronic devices and, more particularly, to a system and method for assisting a user recall a former location using audio input captured when the user was in the former location.

### BACKGROUND

Persons are often interested in recalling where they were in the past. Sometimes, however, a person may not be able recall where he or she was or how to get to a former location. The person may be able to recall aspects of the user's experience at the location, such as receipt of a phone call or a conversation. But conventional location tracking techniques do not provide a convenient way to use recalled aspects of the user's experience at a location to assist the user recall the location or return to the location.

### SUMMARY

To enhance a user's ability in recalling or returning to a former location, the present disclosure describes an improved electronic device and method of location tracking. In one embodiment, the electronic device records audio, such as the user's speech and/or speech from others. The location at which the speech is recorded is determined and stored. The speech may be converted to text, which is associated with the determined location. The converted text may be indexed for searching. Then, the user may perform a text-based search for words that the user may recall speaking and/or hearing at the location. Returned search results may remind the user of the location and provide directions for returning to the location.

According to one aspect of the disclosure, an electronic device is configured to assist a user in recalling a prior location, and includes an audio input; and a control circuit configured to: scan the audio input for an audio signal and record the audio signal; store a transcript of text from the recorded audio signal and an associated location for a place in which the recording of the audio signal was made in a database that contains transcripts of audio recordings from a plurality of locations; and search the database for user entered search criteria including at least one word and return at least one search result of a location that has an associated transcript that matches the search criteria.

According to one embodiment of the electronic device, the audio signal is recorded only if the audio signal contains a speech component.

According to one embodiment of the electronic device, the audio signal is recorded only if the audio signal contains speech determined to belong to a predetermined individual.

According to one embodiment of the electronic device, the control circuit is further configured to determine if the electronic device has changed location and, if so, start a new scan for an audio signal and start a new audio signal recording.

According to one embodiment of the electronic device, the control circuit is further configured to convert speech in the audio signal to text.

According to one embodiment of the electronic device, the conversion is made during an idle time of the electronic device.

According to one embodiment of the electronic device, the audio signal is transferred to another device for conversion to text.

According to one embodiment of the electronic device, the control circuit is further configured to index the text to facilitate searching of the database.

According to one embodiment of the electronic device, the control circuit is further configured to provide directions to the location that has an associated transcript that matches the search criteria.

According to one embodiment of the electronic device, the control circuit is further configured to provide a link to a photograph that was taken at the location, a video that was taken at the location, or a message that was received or sent at the location.

According to another aspect of the disclosure, a method of assisting a user in recalling a prior location includes scanning an audio input for an audio signal and recording the audio signal; storing a transcript of text from the recorded audio signal and an associated location for a place in which the recording of the audio signal was made in a database that contains transcripts of audio recordings from a plurality of locations; and searching the database for user entered search criteria including at least one word and returning at least one search result of a location that has an associated transcript that matches the search criteria.

According to one embodiment of the method, the audio signal is recorded only if the audio signal contains a speech component.

According to one embodiment of the method, the audio signal is recorded only if the audio signal contains speech determined to belong to a predetermined individual.

According to one embodiment, the method further includes determining if the electronic device has changed location and, if so, start a new scan for an audio signal and start a new audio signal recording.

According to one embodiment, the method further includes converting speech in the audio signal to text with an electronic device that records the audio signal.

According to one embodiment of the method, the conversion is made during an idle time of the electronic device.

According to one embodiment, the method further includes transferring the audio signal to another device for conversion to text.

According to one embodiment, the method further includes indexing the text to facilitate searching of the database.

According to one embodiment, the method further includes providing directions to the location that has an associated transcript that matches the search criteria.

According to one embodiment, the method further includes providing a link to a photograph that was taken at the location, a video that was taken at the location, or a message that was received or sent at the location.

These and further features will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the scope of the claims appended hereto.

Features that are described and/or illustrated with respect to one embodiment may be used in the same way or in a similar way in one or more other embodiments and/or in combination with or instead of the features of the other embodiments.

### BRIEF DESCRIPTION OF THE DRAWINGS

FIG. 1 is a schematic view of a mobile telephone as part of a communication system and as an exemplary electronic device that includes an audio/location function;
FIG. 2 is a flow chart representing an exemplary method of tracking electronic device location using recorded audio; and

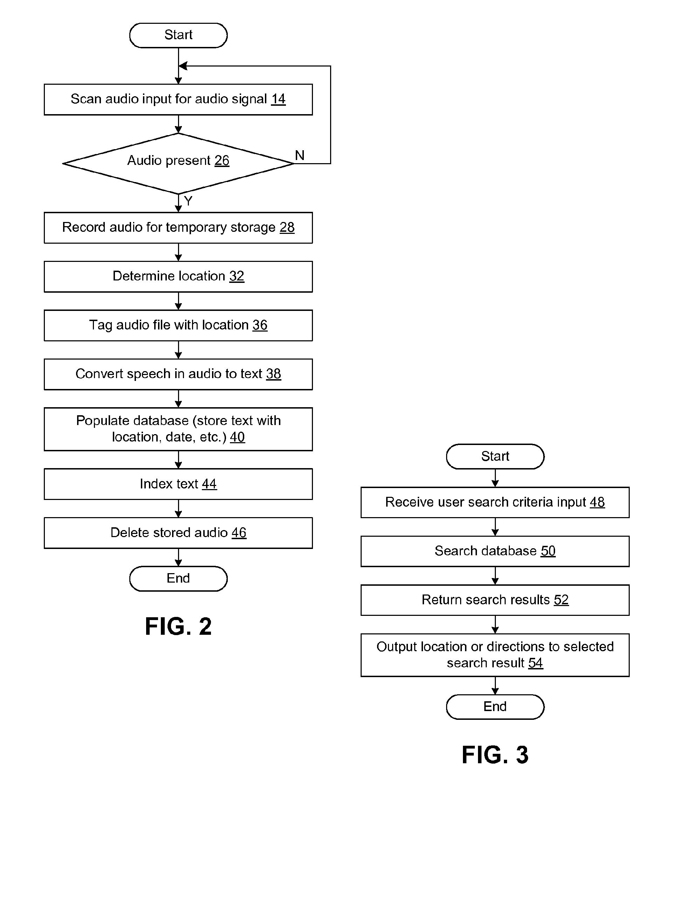

FIG. 2 is a flow chart representing an exemplary method of recalling a former location.

### DETAILED DESCRIPTION OF EMBODIMENTS

Embodiments will now be described with reference to the drawings, wherein like reference numerals are used to refer to like elements throughout. It will be understood that the figures are not necessarily to scale.

In the present document, embodiments are described primarily in the context of a portable radio communications device, such as the illustrated mobile telephone. It will be appreciated, however, that the exemplary context of a mobile telephone is not the only operational environment in which aspects of the disclosed systems and methods may be used. Therefore, the techniques described in this document may be applied to any type of appropriate electronic device, examples of which include a mobile telephone, a media player, a gaming device, a computer, a pager, a communicator, an electronic organizer, a personal digital assistant (PDA), a smartphone, a portable communication apparatus, etc.

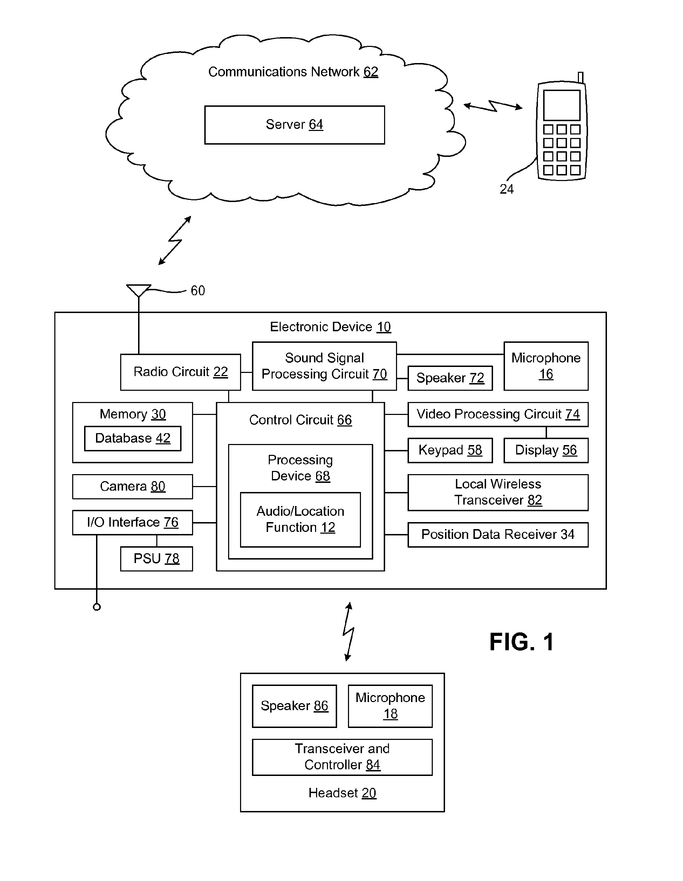

Referring initially to FIG. 1, an electronic device 10 is shown. The electronic device 10 includes an audio/location function 12 that is configured to assist a user in recalling a former location. Additional details and operation of the audio/location function 12 will be described in greater detail below. The audio/location function 12 may be embodied as executable instructions (e.g., code) that is resident in and executed by the electronic device 10. In one embodiment, the audio/location function 12 may be one or more programs that are stored on a computer or machine readable medium. The audio/location function 12 may be a stand-alone software application or form a part of a software application that carries out additional tasks related to the electronic device 10.

Also, through the following description, exemplary techniques for location tracking and former location recall are described. It will be appreciated that through the description of the exemplary techniques, a description of steps that may be carried out in part by executing software is described. A computer program listing is omitted for the sake of brevity. However, the described steps may be considered a method that the corresponding device is configured to carry out.

With additional reference to FIG. 2, illustrated are logical operations to implement an exemplary method of location tracking using recorded audio. The exemplary method may be carried out by executing an embodiment of the audio/location function 12, for example. Thus, the flow chart of FIG. 2 may be thought of as depicting steps of a method carried out by the electronic device 10. Although FIG. 2 shows a specific order of executing functional logic blocks, the order of executing the blocks may be changed relative to the order shown. Also, two or more blocks shown in succession may be executed concurrently or with partial concurrence. Certain blocks also may be omitted.

In one embodiment, the logical operations of FIG. 2 may be carried out each time the electronic device 10 detects a change in location of the electronic device 10, such as a relative stop in motion after travelling from a prior location. The operations also may be carried out while traveling between locations, or at user specified times.

The logical flow for the audio/location function 12 may begin in block 14 where one or more audio inputs are scanned to detect the presence of an input audio signal. The audio inputs may include, for example, a microphone 16 that is integral with the electronic device 10. In the case of a mobile telephone, the microphone 16 may be present for the primary function of capturing a user's speech during telephone calls. Another type of audio input may be a microphone 18 that is part of an accessory for the electronic device 10. In the illustrated example, the accessory is a telephone headset 20, which is also referred to as a personal handsfree (PHF). A telephone headset of this nature may have a wired or wireless connection with the electronic device. Another audio input may be a radio circuit 22 that receives audio signals during telephone calls, or some other component of the electronic device 10 that is involved in handling audio signals for telephone calls. These audio signals may contain speech from a remote person that uses a remotely located telephone 24 during a telephone call involving the electronic device 10.

The scanning for the presence of an audio signal may be carried out while the electronic device 10 is used for telephone calls and/or at other times. Therefore, the below-described audio signal processing may be carried out to monitor telephone calls and/or to monitor the environment of the electronic device 10 for the presence of sounds, especially speech. Monitoring of the environment of the electronic device 10 may be carried out when the electronic device is idle (e.g., not being used for a telephone call) and/or when the electronic is used for other tasks (e.g., browsing the Internet, writing or reading a message, etc.). The scanning may be applied to analog audio signals (e.g., electrical signals output by one of the microphones 16 or 18) or digital signals (e.g., microphone output signals that have been converted to digital signals or signals received by the radio circuit 22).

A determination may be made in block 26 as to whether an audio signal is present. In one embodiment, the scanning and determination may be carried out for any audio signal present at one of the audio inputs regardless of the nature of the audio signal. In this case, a positive determination may be made in block 26 when an audio signal is present and this audio signal may contain speech, music, background noises, and so forth. In another embodiment, the scanning and determination may be carried out for audio signals that specifically include at least speech. In this case, a positive determination may be made in block 26 when a speech-containing audio signal is detected. In an even more specific embodiment, the scanning and determination may be carried out for speech of the user and/or one or more other predetermined individuals. For instance, voice recognition may be applied to detected audio to ascertain whether a known speaker is contributing to the audio input. In another approach, the scanning and determination may be made at user specified times (e.g., when the user has selected to manually activate the audio/location function 12), at predetermined times (e.g., during telephone calls, or at certain hours of the day), and/or in predetermined types of locations (e.g., in restaurants, shopping malls, etc.).

If a negative determination is made in block 26, continued scanning for audio may be made. If a positive determination is made in block 26, the logical flow may proceed to block 28 where the detected audio signal is recorded. The recorded audio signal may be stored in the form of an audio file in any appropriate file format, such as a WAV file, an MP3 file, etc. The audio file may be stored in a memory 30. As will be explained in greater detail below, the stored audio file is intended to be temporarily stored and may be deleted after processing of the audio content of the file has been made.

In block 32, a location of the electronic device may be determined. The location determination may be made using any appropriate technique, such as by making use of a position data receiver 34. The location data receiver 34 may be, for example, a global positioning system (GPS) receiver. Assisted GPS (A-GPS) may be used to offload some of the location determining processing to an assistance server. Other techniques for determining location may be possible, such as using a known location of a base station or an access point that provides network connectivity for the electronic device 10. Next, the stored audio file may be tagged with the determined location in block 36.

In block 38, speech that is present in the audio file may be converted to text. A speech to text software engine may be used for this task. The resulting text may be stored in a text file in the memory 30. The conversion may be carried out by the electronic device 10 or the audio file may be transferred to another device (e.g., a server) to carry out the conversion. If another device is used for the conversion, the text file may be transferred to the electronic device 30. In the case where the electronic device 10 is used to conduct the conversion, the conversion may be carried out at a time that minimizes interruption of other tasks by consuming processing power and/or at times when sufficient power is available so as to minimize rapid depletion of battery power. For instance, the conversion may be carried out during idle time and/or when a battery of the electronic device 10 is undergoing charging.

Next, in block 40, the text may be stored in a database 42. The database 42 may be stored in the memory 30. The database 42 may be used to store text from plural audio recordings that are made at different locations. In this manner, the database 42 content may represent a record of words spoken by the user and/or others at various locations. Thus, the database 42 may searched to recall a location at which certain words were spoken.

The text for a specific audio recording will be referred to as a transcript. As indicated, the database 42 may be used to store transcripts from multiple locations and multiple segments of time. Some transcripts may have the same location, but are derived from audio recordings that were recorded at different times. Each transcript in the database 42 may be associated with a location. The associated location may be the location that was tagged to the corresponding audio file. The location may be in the form of coordinates (e.g., GPS data or map coordinates). Alternatively, or in addition to this tag, the location record may be in the form of a text descriptor, such as a street address, a place name that is derived from the Internet for the corresponding coordinates, or a user entered descriptor.

Each transcript also may be associated with a data and time at which the corresponding audio file was recorded. Additional information may be associated with transcripts in the database 42. For example, a record of photographs or videos that were taken at the location during or close in time to the recording of the audio file may be contained in the database. Similarly, a record of telephone calls that were made or received and/or a record of messages (e.g., instant messages, text messages, multimedia messages or email messages) that were sent or received during or close in time to the recording of the audio file may be contained in the database. Also, while relatively fresh in the user's memory, transcripts may be tagged with a user's description of the associated location (e.g., a name of person, a name of a restaurant, a name of an intersection, etc.). An exemplary, user-entered descriptor could be "lunch with Sarah at the Diner."

The text also may be indexed for efficient searching in block 44. Indexing of text may be carried out by an indexing software engine that searches for and catalogs words that are commonly used in searches. In block 46, the audio file may be deleted from the memory 30 to free memory space.

With additional reference to FIG. 3, illustrated are logical operations to implement an exemplary method of recalling a prior location using text from previously recorded audio. The exemplary method may be carried out by executing an embodiment of the audio/location function 12, for example. Thus, the flow chart of FIG. 3 may be thought of as depicting steps of a method carried out by the electronic device 10. Although FIG. 3 shows a specific order of executing functional logic blocks, the order of executing the blocks may be changed relative to the order shown. Also, two or more blocks shown in succession may be executed concurrently or with partial concurrence. Certain blocks also may be omitted.

The logical flow for the audio/location function 12 may begin in block 48 where the electronic device 10 receives search criteria. The search criteria may be received by user input, such as the entry of text using a user input device or graphical user interface. The entered text may contain words that the user recalls as being spoken in a location, but where the location cannot be recalled or directions to the location are desired. For instance, the user may remember that he or she, or another speaker, spoke an unusual phrase, quoted a movie or other speaker, or said some other memorable phrase at the location to be recalled. The search criteria may include prominent words from the recalled conversation or other speech.

As an example, the user may recall speaking the name of a friend (for purposes of example, the name "Anders") and commenting on food being eaten (for purposes of example, saying "this is the best chocolate cake I have tasted") at the location. Continuing this example, the search criteria may include the words "chocolate" and "cake", or may include the words "best", "chocolate" and "cake", or may includes the words "Anders", "best" and "cake", or some other combination of words.

Next, in block 50, a search may be made of the database 42 for transcripts that match the search criteria. Searching may be conducted by a software-based search engine that makes use of the indexed words to match the search criteria to transcripts that are stored in the database 42. As use herein, the term "match," and grammatical variations thereof, need not include finding one hundred percent accuracy between search criteria and transcripts. Search results may be returned and displayed to the user in block 52. The search results may be displayed by location in the form of a list by location identifier, Internet derived descriptor, address, or user entered descriptor, and/or may be displayed as points on a map. The search results may be selectable. In block 54, if the user selects a search result, information corresponding to the selected location may be displayed and/or directions from a current location (or other specified location) to the location of the selected search result may be generated for the user to return to the location. Also, links to any items associated with the location (e.g., photos, videos, call logs, messages, etc.) may be displayed for the user to access the associated item.

As will be appreciated, the disclosed systems and methods allow a user to track the places he or she has been and with whom he or she was with in those places. Searches may be made for places of interest, even if the user may not remember the exact location.

Additional details of the electronic device 10 when configured as a mobile telephone will now be described. The electronic device 10 may include a display 56. In addition to the content mentioned above, the display 56 displays information, video, graphics, menus, Internet content, and graphical interfaces to the user.

A keypad 58 may be present to provide for a variety of user input operations. For example, the keypad 58 may include alphanumeric keys, special function keys, navigation and select keys, and so forth. A navigation input device also may be present. Input functionality also may be embodied as a touch screen associated with the display 56. Also, the display 56 and keypad 58 may be used in conjunction with one another to implement soft key functionality.

The electronic device 10 includes communications circuitry that enables the electronic device 10 to establish communications with another device. Communications may include calls, data transfers, and the like. Calls may take any suitable form such as, but not limited to, voice calls and video calls. The calls may be carried out over a cellular circuit-switched network or may be in the form of a voice over Internet Protocol (VoIP) call that is established over a packet-switched capability of a cellular network or over an alternative packet-switched network (e.g., a network compatible with IEEE 802.11, which is commonly referred to as WiFi), for example. Data transfers may include, but are not limited to, receiving streaming content, downloading and/or uploading data, receiving or sending messages, and so forth. This data may be processed by the electronic device 10, including storing the data in the memory 30, executing applications to allow user interaction with the data, displaying video and/or image content associated with the data, outputting audio sounds associated with the data, and so forth.

In the exemplary embodiment, the communications circuitry may include an antenna 60 coupled to the radio circuit 22. The radio circuit 22 may include a radio frequency transmitter and receiver for transmitting and receiving signals via the antenna 60. The radio circuit 22 may be configured to operate in a mobile communications system. Radio circuit 22 types for interaction with a mobile radio network and/or broadcasting network include, but are not limited to, global system for mobile communications (GSM), code division multiple access (CDMA), wideband CDMA (WCDMA), general packet radio service (GPRS), WiFi, WiMAX, integrated services digital broadcasting (ISDB), and/or high speed packet access (HSPA), as well as advanced versions of these standards or any other appropriate standard. It will be appreciated that the electronic device 10 may be capable of communicating using more than one standard. Therefore, the antenna 60 and the radio circuit 22 may represent one or more than one radio transceiver.

The electronic device 10 may communicate with a communications network 62 that has a server 64 (or servers) for managing calls placed by and destined to the electronic device 10, transmitting data to and receiving data from the electronic device 10 and carrying out any other support functions. The server 64 communicates with the electronic device 10 via a transmission medium. The transmission medium may be any appropriate device or assembly, including, for example, a communications base station (e.g., a cellular service tower, or "cell" tower), a wireless access point, a satellite, etc. The network 62 may support the communications activity of multiple electronic devices 10 and other types of end user devices. As will be appreciated, the server 64 may be configured as a typical computer system used to carry out server functions and may include a processor configured to execute software containing logical instructions that embody the functions of the server 64 and a memory to store such software. In alternative arrangements, the electronic device 10 may wirelessly communicate directly with another electronic device 10 (e.g., another mobile telephone or a computer) through a local network or without an intervening network.

The electronic device 10 may include a primary control circuit 66 that is configured to carry out overall control of the functions and operations of the electronic device 10. The control circuit 66 may include a processing device 68, such as a central processing unit (CPU), microcontroller or microprocessor. The processing device 68 executes code stored in a memory (not shown) within the control circuit 66 and/or in a separate memory, such as the memory 30, in order to carry out operation of the electronic device 10. For instance, the memory within the control circuit 66 and/or the memory 30 may store executable code that embodies the audio/location function 12 and the processing device 68 may execute that code so that the control circuit 66 is configured to implement the functions of the audio/location function 12. The memory 30 may be, for example, one or more of a buffer, a flash memory, a hard drive, a removable media, a volatile memory, a non-volatile memory, a random access memory (RAM), or other suitable device. In a typical arrangement, the memory 30 may include a non-volatile memory for long term data storage and a volatile memory that functions as system memory for the control circuit 66. The memory 30 may exchange data with the control circuit 66 over a data bus. Accompanying control lines and an address bus between the memory 30 and the control circuit 66 also may be present.

The electronic device 10 further includes a sound signal processing circuit 70 for processing audio signals transmitted by and received from the radio circuit 22. Coupled to the sound processing circuit 70 are a speaker 72 and the microphone 16 that enable a user to listen and speak via the electronic device 10. The radio circuit 22 and sound processing circuit 70 are each coupled to the control circuit 66 so as to carry out overall operation. Audio data may be passed from the control circuit 66 to the sound signal processing circuit 70 for playback to the user. The audio data may include, for example, audio data from an audio file stored by the memory 30 and retrieved by the control circuit 66, or received audio data such as in the form of voice communications or streaming audio data from a mobile radio service. The sound processing circuit 70 may include any appropriate buffers, encoders, decoders, amplifiers and so forth.

The display 56 may be coupled to the control circuit 66 by a video processing circuit 74 that converts video data to a video signal used to drive the display 56. The video processing circuit 74 may include any appropriate buffers, decoders, video data processors and so forth. The video data may be generated by the control circuit 66, retrieved from a video file that is stored in the memory 30, derived from an incoming video data stream that is received by the radio circuit 22 or obtained by any other suitable method.

The electronic device 10 may further include one or more input/output (I/O) interface(s) 76. The I/O interface(s) 76 may be in the form of typical mobile telephone I/O interfaces and may include one or more electrical connectors. The I/O interfaces 76 may form one or more data ports for connecting the electronic device 10 to another device (e.g., a computer) or an accessory (e.g., a personal handsfree (PHF) device) via a cable. Further, operating power may be received over the I/O interface(s) 76 and power to charge a battery of a power supply unit (PSU) 78 within the electronic device 10 may be received over the I/O interface(s) 76. The PSU 78 may supply power to operate the electronic device 10 in the absence of an external power source.

The electronic device 10 also may include various other components. For instance, a camera 80 may be present for taking digital pictures and/or movies. Image and/or video files corresponding to the pictures and/or movies may be stored in the memory 30.

A local transceiver 82, such as an RF transceiver (e.g., a Bluetooth chipset) may be present to establish communication with a nearby device, such as an accessory (e.g., the headset 20), another mobile radio terminal, a computer or another device.

The headset 20 may include a coordinating transceiver and controller 84 to effectuate communication with the electronic device 10. The headset 20 may further include a speaker 86 for outputting audio to the user.

Although certain embodiments have been shown and described, it is understood that equivalents and modifications falling within the scope of the appended claims will occur to others who are skilled in the art upon the reading and understanding of this specification.

## Claims

1. An electronic device (10) configured to assist a user in recalling a prior location, comprising:
an audio input (16, 18, 22); and
a control circuit (66) configured to:
scan the audio input for an audio signal and record the audio signal;
store a transcript of text from the recorded audio signal and an associated location for a place in which the recording of the audio signal was made in a database that contains transcripts of audio recordings from a plurality of locations; and
search the database for user entered search criteria including at least one word and return at least one search result of a location that has an associated transcript that matches the search criteria.

2. The electronic device of claim 1, wherein the audio signal is recorded only if the audio signal contains a speech component.

3. The electronic device of claim 2, wherein the audio signal is recorded only if the audio signal contains speech determined to belong to a predetermined individual.

4. The electronic device of any one of claims 1-3, wherein the control circuit is further configured to determine if the electronic device has changed location and, if so, start a new scan for an audio signal and start a new audio signal recording.

5. The electronic device of any one of claims 1-4, wherein the control circuit is further configured to convert speech in the audio signal to text.

6. The electronic device of claim 5, wherein the conversion is made during an idle time of the electronic device.

7. The electronic device of any one of claims 1-4, wherein the audio signal is transferred to another device for conversion to text.

8. The electronic device of any one of claims 1-7, wherein the control circuit is further configured to index the text to facilitate searching of the database.

9. The electronic device of any one of claims 1-8, wherein the control circuit is further configured to provide directions to the location that has an associated transcript that matches the search criteria.

10. The electronic device of any one of claims 1-9, wherein the control circuit is further configured to provide a link to a photograph that was taken at the location, a video that was taken at the location, or a message that was received or sent at the location.

11. A method of assisting a user in recalling a prior location, comprising:
scanning an audio input (16, 18, 22) for an audio signal and recording the audio signal;
storing a transcript of text from the recorded audio signal and an associated location for a place in which the recording of the audio signal was made in a database that contains transcripts of audio recordings from a plurality of locations; and
searching the database for user entered search criteria including at least one word and returning at least one search result of a location that has an associated transcript that matches the search criteria.

12. The method of claim 11, further comprising determining if the electronic device has changed location and, if so, start a new scan for an audio signal and start a new audio signal recording.

13. The method of any one of claims 11-12, further comprising indexing the text to facilitate searching of the database.

14. The method of any one of claims 11-13, further comprising providing directions to the location that has an associated transcript that matches the search criteria.

15. The method of any one of claims 11-14, further comprising providing a link to a photograph that was taken at the location, a video that was taken at the location, or a message that was received or sent at the location.
